# Europäisches Patentamt
# European Patent Office
# Office européen des brevets

(19)

(11) Veröffentlichungsnummer: **0 511 976 B1**

(12)
# EUROPÄISCHE PATENTSCHRIFT

(45) Veröffentlichungstag der Patentschrift: **07.09.94**

(51) Int. Cl.5: **C09D 161/20**, C09D 167/06

(21) Anmeldenummer: **91901764.0**

(22) Anmeldetag: **16.01.91**

(86) Internationale Anmeldenummer:
**PCT/EP91/00059**

(87) Internationale Veröffentlichungsnummer:
**WO 91/10713 (25.07.91 91/17)**

(54) **WÄSSRIGE BESCHICHTUNGSZUSAMMENSETZUNG, INSBESONDERE ZUR BESCHICHTUNG VON FINISH-FOLIEN UND ENDLOSKANTEN SOWIE VERFAHREN ZUM BESCHICHTEN VON FINISH-FOLIEN UND ENDLOSKANTEN.**

(30) Priorität: **22.01.90 DE 4001672**

(43) Veröffentlichungstag der Anmeldung:
**11.11.92 Patentblatt 92/46**

(45) Bekanntmachung des Hinweises auf die Patenterteilung:
**07.09.94 Patentblatt 94/36**

(84) Benannte Vertragsstaaten:
**AT BE CH DE DK ES FR GB IT LI NL SE**

(56) Entgegenhaltungen:
**DE-A- 2 011 537**
**DE-A- 2 316 158**
**DE-C- 3 119 380**

(73) Patentinhaber: **BASF Lacke + Farben AG**
**Glasuritstrasse 1**
**D-48165 Münster-Hiltrup (DE)**

(72) Erfinder: **HINTZE-BRÜNING, Horst, Dr.**
**Karl-Immermann-Strasse 32**
**W-4400 Münster (DE)**
Erfinder: **ROLL, Joachim, Dr.**
**Strassburger Weg 56**
**W-4400 Münster (DE)**

(74) Vertreter: **Münch, Volker, Dr.**
**BASF Lacke + Farben AG**
**Patente/Lizenzen/Dokumentation**
**Postfach 61 23**
**D-48136 Münster (DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Gegenstand der vorliegenden Erfindung sind wäßrige Beschichtungszusammensetzungen, insbesondere zur Beschichtung von Finish-Folien und Endloskanten, enthaltend eine Lackkomponente I, die

A) 15 bis 70 Gew.-%, bevorzugt 30 bis 55 Gew.-%, bezogen auf das Gesamtgewicht der Lackkomponente I, eines oder mehrerer wasserverdünnbarer Melamin- und/oder Harnstoffharze

B) 10 bis 40 Gew.-%, bevorzugt 15 bis 25 Gew.-%, bezogen auf das Gesamtgewicht der Lackkomponente I, eines oder mehrerer hydroxylgruppenhaltiger Polyester sowie

C) ggf. Pigmente und/oder Füllstoffe sowie ggf. übliche Hilfs- und Zusatzstoffe und

D) ggf. Verdünnungsmittel, bestehend zu mindestens 50 Gew.-% aus Wasser und ggf. organischen Lösungsmitteln, enthält und eine Lackkomponente II, die 0,5 bis 50 Gew.-%, bezogen auf das Gesamtgewicht der Komponenten A bis C, eines sauren Härtungskatalysators enthält.

Gegenstand der Erfindung sind außerdem Verfahren zur Beschichtung von Finish-Folien und Endloskanten unter Verwendung dieser wäßrigen Beschichtungszusammensetzungen.

Imprägnierte Papiere, die auf Platten verpreßt eine Vorbereitung im Sinne einer Grundierung darstellen (Grundierfolie) oder häufig auch eine dekorative Wirkung entfalten (Dekorfolie), sind in der Möbel- und Plattenindustrie seit langem bewährt. Die Folien müssen nach dem Verpressen auf Span- oder Hartfaserplatten überlackiert werden.

Dieser zusätzliche Arbeitsgang entfällt beim Einsatz von Finishfolie, die im Anschluß an die Imprägnierung bereits beim Folienhersteller lackiert wird. Die so erhaltenen Finishfolien und Endloskanten (zur kontinuierlichen Kantenbeschichtung) werden als Rollenware an die Möbel- und Plattenindustrie geliefert, wo sie unter Hitze- und/oder Druckeinwirkung mit Substraten, wie z.B. Span- oder Hartfasernplatten verleimt werden. Auf diese Weise werden Flächen erhalten, die in der Regel keiner weiteren Lackierung mehr bedürfen, also "preßfallend" weiterverarbeitet werden können. Für dieses Verfahren geeignete Lacke sind beispielsweise in der DE-OS 23 16 158 beschrieben.

Durch die Entwicklung spezieller, wasserabweisender Porendruckfarben sind auch Finish-Folien mit einer dreidimensionalen Porenstruktur verfügbar, die eine treffliche Imitation eines Holzfurniers darstellen (vgl. z.B. DE-OS 32 47 677; US-PS-3,811,915 und DE-OS 30 24 391). Auch diese Folien werden in der Regel ohne eine weitere Lackierung weiterverarbeitet.

Um bestimmte Oberflächen, bei denen besonders hohe Anforderungen an die Qualität gestellt werden, wie z.B. Schrankfronten, optisch aufzuwerten und/oder um Transportschäden, die an der Lackschicht entstanden sind, auszubessern, werden derartige Finish-Folien und Endloskanten allerdings gegebenenfalls teilweise überlackiert. Für diese Überlackierung werden konventionelle Holzlacke eingesetzt, beispielsweise säurehärtende Lacke, Lacke auf Basis von Polyurethanen, ungesättigten Polyesterharzen und Nitrocellulose.

Die Haftung dieser Lacke auf den Finishfolien wurde in der Vergangenheit so erzielt, daß entweder eine mechanische Vorbehandlung (Anschleifen) der Lackoberflächen durchgeführt wurde, oder die Dekorfolien mit speziellen, wasserverdünnbaren Beschichtungsmitteln überlackiert wurden, die nach ihrer Trocknung und Verpressung ohne Vorbehandlung überlackierbar waren.

Nach entsprechender Vorbehandlung bzw. durch Weichmacherzusatz überlackierbare Beschichtungsmittel sind beispielswiese in der DE-OS 23 16 158 beschrieben.

Derartige spezielle Beschichtungsmittel enthalten einen hohen Anteil von 10 bis 35 Gew.-%, bezogen auf das Gesamtgewicht des Beschichtungsmittels, Weichmachern, ohne die eine ausreichende Haftung der Holzlacke auf der Folie nicht gegeben ist. Dieser hohe Weichmacheranteil derartiger Beschichtungsmittel führt aber dazu, daß die mit diesen Beschichtungsmitteln lackierten und nicht mit einem anderen Lack überlackierten Folien schlechte Gebrauchseigenschaften, wie z.B. schlechte Kratzfestigkeit, Chemikalienbeständigkeit und Vergrauungsstabilität aufweisen. Weiterhin kann dieser hohe Weichmacheranteil zu einer Emission der niedermolekularen Weichmacher bei den in der Praxis üblichen Trocknungsbedingungen oder zu einer langsamen Emission aus dem Lackfilm und damit verbundenem Filmabbau sowie Vergrauung führen.

Schließlich sind aus der DE-PS 31 19 380 flüssige Überzugsmittel auf der Basis von Aminoplastharzen und hydroxylgruppenhaltigen Polyestern bekannt, bei denen die Polyester hergestellt worden sind aus einer Mischung aus überwiegend aromatischen Dicarbonsäuren und ggf. aliphatischen Dicarbonsäuren als Säurekomponente und überwiegend (cyclo)aliphatischen Diolen sowie ggf. Polyolen mit 3 bis 5 Hydroxylgruppen und 3 bis 6 C-Atomen. Kennzeichnend ist die Verwendung von Hydroximethylhydroxipropylcyclohexan als eine oder alleinige Alkoholkomponente zur Herstellung der Polyester.

Der vorliegenden Erfindung liegt somit die Aufgabe zugrunde, wäßrige Beschichtungszusammensetzungen für die Beschichtung von Finishfolien, Endloskanten und Holzwerkstoffen zur Verfügung zu stellen, die auch ohne Überlackierung zu Beschichtungen mit guten Gebrauchseigenschaften, wie z.B. guter Kratzfestigkeit, Chemikalienbeständigkeit und Vergrauungsstabilität führen. Insbesondere sollten diese Lacke aber auch mit den konventionellen Lacken gut überlackierbar sein und eine gute Haftung dieser konventionellen Lackschicht auf der in Rede stehenden Beschichtung zeigen. Schließlich sollten sie emissionsarm trockenbar sein, d.h. daß unter den in der Praxis üblichen Trocknungsbedingungen außer den bei der Vernetzung freiwerdenden Kondensationsabspaltprodukten keine weiteren organischen Stoffe, wie z.B. flüchtige Weichmacher, emittiert werden.

Diese Aufgabe wird überraschenderweise durch wäßrige Beschichtungszusammensetzungen, enthaltend eine Lackkomponente I, die

A) 15 bis 70 Gew.-%, bevorzugt 30 bis 55 Gew.-%, bezogen auf das Gesamtgewicht der Lackkomponente I, eines oder mehrerer wasserverdünnbarer Melamin- und/oder Harnstoffharze

B) 10 bis 40 Gew.-%, bevorzugt 15 bis 25 Gew.-%, bezogen auf das Gesamtgewicht der Lackkomponente I, eines oder mehrerer hydroxylgruppenhaltiger Polyester sowie

C) ggf. Pigmente und/oder Füllstoffe sowie ggf. übliche Hilfs- und Zusatzstoffe und

D) ggf. Verdünnungsmittel, bestehend zu mindestens 50 Gew.-% aus Wasser und ggf. organischen Lösungsmitteln,

enthält und eine Lackkomponente II, die 0,5 bis 50 Gew.-%, bezogen auf das Gesamtgewicht der Komponenten A bis C, eines sauren Härtungskatalysators enthält, gelöst . Die Beschichtungszusammensetzungen sind dadurch gekennzeichnet, daß die als Komponente B eingesetzten Polyester hergestellt worden sind aus

a) 33 bis 55 Mol-% Dicarbonsäuren und

b) 67 bis 45 Mol-% Di- und/oder Polyolen,

wobei die Dicarbonsäurekomponente a eine Mischung aus

$a_1$) 50 bis 100 Mol-% mindestens einer olefinisch ungesättigten, aliphatischen Dicarbonsäure

$a_2$) 0 bis 50 Mol-% mindestens einer gesättigten, aliphatischen Dicarbonsäure und

$a_3$) 0 bis 50 Mol-% mindestens einer aromatischen Dicarbonsäure

und die Di- und/oder Polyolkomponente b eine Mischung aus

$b_1$) 20 bis 90 Mol-% mindestens eines monomeren und/- oder oligomeren Glykols mit 2 bis 4 C-Atomen pro Glykolsegment und mit zahlenmittleren Molekulargewichten kleiner/gleich 200

$b_2$) 5 bis 30 Mol-% mindestens eines polymeren Glykols mit 2 bis 4 C-Atomen pro Glykolsegment und mit einem zahlenmittleren Molekulargewicht zwischen 300 und 1000 und

$b_3$) 0 bis 70 Mol-% mindestens eines Polyols mit 2 bis 4 OH-Gruppen und mit 4 bis 10 C-Atomen pro Molekül, ausgenommen die als Komponente $b_1$ eingesetzten Glykole

ist, mit der Maßgabe, daß sowohl die Summe der Anteile der Komponenten $a_1$ bis $a_3$ als auch die Summe der Anteile der Komponenten $b_1$ bis $b_3$ als auch die Summe der Anteile der Komponenten a und b jeweils für sich 100 Mol-% beträgt.

Die Erfindung betrifft außerdem Verfahren zur Beschichtung von Finish-Folien und Endloskanten unter Verwendung dieser wäßrigen Beschichtungszusammensetzungen sowie die nach diesem Verfahren erhaltenen Finish-Folien und Endloskanten und deren Verwendung zur Verleimung mit Span- oder Hartfaserplatten.

Im folgenden werden nun zunächst die einzelnen Komponenten der erfindungsgemäßen wäßrigen Beschichtungszusammensetzung näher erläutert.

Bei den in der Lackkomponente I eingesetzten Melamin-Harzen (Komponente A) handelt es sich um allgemein bekannte, in der Regel veretherte Melamin-Aldehyd-Umsetzungsprodukte, bevorzugt Melamin-Formaldehyd-Umsetzungsprodukte. Die Wasserverdünnbarkeit der Melaminharze hängt, abgesehen vom Kondensationsgrad, der möglichst niedrig sein sollte, von der Veretherungskomponente ab, wobei nur die niedrigsten Glieder der Alkanolreihe wasserlösliche Kondensate ergeben. Die größte Bedeutung haben die Hexamethoximethylmelaminharze. Bei Verwendung von Lösungsvermittlern können auch butanolveretherte Melaminharze in wäßriger Phase dispergiert werden.

Als Beispiele für geeignete Melamin-Harze seien die im Handel unter dem Markennamen Cymel® 300, 301, 303 (Hersteller: Dyno Cyanamid, Düsseldorf), Luwipal® 068, 066, LR 8789, (Hersteller: BASF AG, Ludwigshafen), Beetle® BE 3745 und BE 370 (Hersteller: BIP Chemicals Ltd., Großbritannien), Maprenal® MF 900, 904 und 910 (Hersteller: Hoechst AG), Cibamin® (Ciba AG, Schweiz), Resimene® 714, 745 und 747 (Monsanto) erhältlichen wasserlöslichen Melaminharze genannt. Bevorzugt eingesetzt werden Hexamethoximethylmelaminharze, wie z.B. Cymel® 300, 301, 303; Luwipal® 066 und Maprena® MF 900.

Bei den in der Lackkomponente I eingesetzten Harnstoff-Harzen (Komponente A) handelt es sich ebenfalls um bekannte wasserverdünnbare Harnstoff-Aldehyd-Umsetzungsprodukte, bevorzugt wasserverdünnbare Harnstoff-Formaldehyd-Umsetzungsprodukte. Als Beispiele für geeignete Harze seien die im Handel unter dem Markennamen Dynomin® UM 15 (Hersteller: Norsk Spraengstof Industrie, Norwegen), Resamin® VHW 3525 (Hersteller: Hochest AG) oder Plastopal® (Hersteller: BASF AG, Ludwigshafen)

3

erhältlichen plastifizierten bzw. nicht plastifizierten Harnstoff-Formaldehyd-Umsetzungsprodukte genannt.

Die Melamin- und die Harnstoff-Harze können dabei einzeln oder im Gemisch als Komponente A eingesetzt werden. Der erfindungsgemäße Zweikomponentenlack enthält dabei die Komponente A in einer Menge von 15 bis 70 Gew.-%, bevorzugt 30 bis 55 Gew.-%, jeweils bezogen auf das Gesamtgewicht der Lackkomponente I, d.h. ohne Härterkomponente II.

Zur Vernetzung der Melamin- und/oder Harnstoffharze (Komponente A) enthalten die wäßrigen Beschichtungszusammensetzungen noch 10 bis 40 Gew.-%, bevorzugt 15 bis 25 Gew.-%, jeweils bezogen auf das Gesamtgewicht der Lackkomponente I, eines oder mehrerer hydroxylgrup- penhaltiger Polyester (Komponente B). Diese Polyester sind erfindungsgemäß aufgebaut aus

a) 33 bis 55 Mol-% Dicarbonsäuren und
b) 67 bis 45 Mol-% Di- und/oder Polyolen,

wobei die Dicarbonsäurekomponente a eine Mischung aus

$a_1$) 50 bis 100 Mol-% mindestens einer olefinisch ungesättigten, aliphatischen Dicarbonsäure

$a_2$) 0 bis 50 Mol-% mindestens einer gesättigten, aliphatischen Dicarbonsäure und

$a_3$) 0 bis 50 Mol-% mindestens einer aromatischen Dicarbonsäure

und die Di- und/oder Polyolkomponente b eine Mischung aus

$b_1$) 20 bis 90 Mol-% mindestens eines monomeren und/- oder oligomeren Glykols mit 2 bis 4 C-Atomen pro Glykolsegment und mit zahlenmittleren Molekulargewichten kleiner/gleich 200

$b_2$) 5 bis 30 Mol-% mindestens eines polymeren Glykols mit 2 bis 4 C-Atomen pro Glykolsegment und mit einem zahlenmittleren Molekulargewicht zwischen 300 und 1000 und

$b_3$) 0 bis 70 Mol-% mindestens eines Polyols mit 2 bis 4 OH-Gruppen und mit 4 bis 10 C-Atomen pro Molekül, ausgenommen die als Komponente $b_1$ eingesetzten Glykole

ist, mit der Maßgabe, daß sowohl die Summe der Anteile der Komponenten $a_1$ bis $a_3$ als auch die Summe der Anteile der Komponenten $b_1$ bis $b_3$ als auch die Summe der An- teile der Komponenten a und b jeweils für sich 100 Mol-% beträgt. Bevorzugte hydroxylgruppenhaltige Polyester werden erhalten, wenn die Dicarbonsäurekomponente a zu 100 Mol-% aus der Komponente $a_1$ und/oder die Di- und/oder Polyolkomponente b aus

$b_1$) 25 bis 50 Mol-% der Komponente $b_1$,
$b_2$) 5 bis 20 Mol-% der Komponente $b_2$ und
$b_3$) 45 bis 70 Mol-% der Komponente $b_3$
besteht.

Weiterhin bevorzugte Polyester B werden erhalten, wenn die Dicarbonsäurekomponente a zu 100 Mol-% aus der Komponente $a_1$ und /oder die Di- und/oder Polyolkomponente b aus

$b_1$) 75 bis 90 Mol-% der Komponente $b_1$ und
$b_2$) 10 bis 25 Mol-% der Komponente $b_2$
besteht.

Bevorzugte Polyester werden schließlich auch erhalten, wenn die Polyester B hergestellt worden sind aus

a) 43 bis 48 Mol-% Dicarbonsäure und
b) 57 bis 52 Mol-% Di- und/oder Polyol.

Als Komponente $a_1$ geeignet sind alle olefinisch ungesättigten aliphatischen Dicarbonsäuren, wie z.B. Maleinsäure, Fumarsäure, Itaconsäure und Citraconsäure. Bevorzugt eingesetzt wird Maleinsäure. Diese Säuren können in Form der freien Säuren, ihrer Anhydride - soweit diese existieren - oder in Form ihrer veresterungsfähigen Derivate eingesetzt werden.

Als Komponente $a_2$ geeignet sind alle gesättigten aliphatischen Dicarbonsäuren, wie z.B. Malonsäure, Bernsteinsäure, Glutarsäure, Adipinsäure, Pimelinsäure, Suberinsäure, Ace lainsäure, Sebacinsäure u.ä. Bevorzugt eingesetzt werden Adipinsäure, Bernsteinsäure, Malonsäure und Glutarsäure. Auch diese Säuren können in Form der freien Säuren oder ihrer veresterungsfähigen Derivate (z.B. Anhydride) eingesetzt werden.

Als Komponente $a_3$ geeignet sind alle aromatischen Dicarbonsäuren, beispielsweise Phthalsäure, Isophthalsäure, Terephthalsäure, Naphthalindicarbonsäuren u.ä. Bevorzugt werden aromatische Dicarbonsäuren eingesetzt, die nicht orthoständig substituiert sind,. Besonders bevorzugt werden Phthalsäure und Isophthalsäure sowie deren Mischungen eingesetzt. Diese Säuren können in Form der freien Säuren oder ihrer veresterungsfähigen Derivate (z.B. Anhydride) eingesetzt werden.

Beispiele für geeignete monomere oder oligomere Glykole mit 2 bis 4 C-Atomen pro Glykolsegment und zahlenmittleren Molekulargewichten $\leq$ 150 (Komponente $b_1$) sind beispielsweise Ethylenglykol, Propylenglykol-1,2 und -1,3, 1,3-Butylenglykol, Butandiol-1,4, Diethylenglykol, Triethylenglykol, Dipropylenglykol, Tripropylenglykol, Tetraethylenglykol u.ä. Bevorzugt eingesetzt werden monomere oder oligomere lineare Glykole mit 2 C-Atomen pro Glykolsegment und zahlenmittleren Molekulargewichten $\leqq$ 200.

Als Komponente $b_2$ geeignet sind polymere Glykole, mit 2 bis 4 C-Atomen pro Glykolsegment und zahlenmittleren Molekulargewichten $M_n$ zwischen 300 und 1000, wie z.B. Polyethylen-, Polypropylen- und Polybutylenglykol sowie Copolymere aus Ethylenglykol-, Propylenglykol- und/oder Tetramethylenglykoleinheiten, wobei Polyethylenglykole bevorzugt eingesetzt werden.

Als Komponente $b_3$ geeignete sind verschiedene Diole, wie z.B. Hexandiol-1,6, Neopentylglykol, 2,2,4-Trimethyl-1,3- pentandiol, 1,4-Dimethylolcyclohexan sowie höherfunktionelle Alkohole, wie z.B. Glycerin, Pentaerythrit, Trimethylolethan und Trimethylolpropan.

Bevorzugt eingesetzt wird 2,2,4-Trimethyl-1,3-pentandiol.

Diese hydroxylgruppenhaltigen Polyester können nach den üblichen Verfahren (vgl. z.B. Houben Weyl, Methoden der organischen Chemie, 4. Auflage, Band 14/2, Georg Thieme Verlag, Stuttgart 1961) hergestellt werden. Sie weisen üblicherweise Hydroxylzahlen zwischen 50 und 300 mgKOH/g sowie im allgemeinen zahlenmittlere Molekulargewichte zwischen 400 und 2000, bevorzugt zwischen 500 und 1000 auf. Die eingesetzten Polyester sind üblicherweise flüssig und weisen im allgemeinen eine möglichst niedrige Viskosität auf.

Zum richtigen Einstellen der zweckmäßigen Verarbeitungsviskositäten können sowohl die Lackkomponente I als auch II noch flüssige Verdünnungsmittel enthalten. Geeignete flüssige Verdünnungsmittel bestehen zu mindestens 50 Gew.-%, bevorzugt zu 95 bis 100 Gew.-%, bezogen auf die Summe der Gewichtsanteile aller flüssigen Verdünnungsmittel, aus Wasser. Daneben können auch noch organische Lösungsmittel, wie z.B. ein- oder mehrwertige Alkohole, Ether, Ester und Ketone, wie N-Methylpyrrolidon, Butanol, Isopropanol, Ethanol, Ethyl- und Butylglykol sowie deren Acetate, Butyldiglykol, Ethylenglykoldibutylether, Ethylenglykoldiethylether, Diethylenglykoldimethylether, Cyclohexanon, Methylethylketon, Aceton, Isophoron, Propylenglykol oder Mischungen davon enthalten sind.

Die Menge an eingesetztem Verdünnungsmittel beträgt i.a. für die Lackkomponente I 0 bis 20 Gew.-%, bezogen auf das Gesamtgewicht aller Komponenten der Lackkomponente I. Die Lackkomponente II enthält üblicherweise 30 bis 80 Gew.-%, bezogen auf das Gesamtgewicht der Lackkomponente II, Verdünnungsmittel.

Als Härterkomponente (Lackkomponente II) enthält die erfindungsgemäße wäßrige Beschichtungszusammensetzung eine wasserverdünnbare Säure, deren wäßrige Lösung oder eine mit Aminen oder Aminoalkoholen geblockte Säure oder deren wäßrige Lösung. Als wasserverdünnbare Säuren kommen Phosphorsäure, Maleinsäure, Salzsäure, para-Toluolsulfonsäure und ihre Derivate, Naphthalinsulfonsäure und deren Derivate sowie die entsprechenden Umsetzungsprodukte dieser Säuren mit Aminen oder Aminoalkoholen, wie beispielsweise eine wäßrige Lösung des Ammoniumsalzes der p-Toluolsulfonsäure zum Einsatz. Bei der Formulierung der erfindungsgemäßen Beschichtungszusammensetzungen als Einkomponentensystem werden die Sulfonsäuren in geblockter Form, beispielsweise als Ammoniumsalz, eingesetzt.

Bevorzugt eingesetzt werden para-Toluolsulfonsäure, Salzsäure und Phosphorsäure, wobei para-Toluolsulfonsäure besonders bevorzugt ist. Der Einsatz von Lösungen von para-Toluolsulfonsäure in säurestabilen Acrylatdispersionen als Härterkomponente weist den Vorteil auf, daß die Oberflächeneigenschaften, insbesondere die Flächenüberspannung, verbessert wird. Um eine möglichst gleichmäßige Verteilung dieses Härtungskatalysators in den Beschichtungszusammensetzungen zu erzielen, werden die Säuren oder ihre Derivate bevorzugt als Lösung in Wasser oder einem wasserverdünnbaren Lösungsmittel eingesetzt.

Die Lackkomponenten I und II werden vor der Applikation in einem solchen Verhältnis gemischt, daß auf 100 Gewichtsteile der Lackkomponente I, bestehend aus den Komponenten A bis C (d.h. ohne Verdünnungsmittel), 0,5 bis 50 Gewichtsteile der reinen Härterkomponente II, d.h. Lackkomponente II ohne Verdünnungsmittel, kommen. Die Topfzeit (Zeit während der das Gemisch verarbeitbar ist) des erhaltenen Gemisches hängt beispielsweise von der Art und Konzentration der Härterkomponente und der Verarbeitungstemperatur ab. Entsprechend den Anforderungen der Folienhersteller liegen die Topfzeiten der Gemische über 24 h. Die Lackkomponenten I und II sind dagegen getrennt länger als 2 Monate stabil.

In den erfindungsgemäßen wäßrigen Beschichtungszusammensetzungen können auch noch übliche Hilfs- und Zusatzstoffe in den üblichen Mengen enthalten sein, wie beispielsweise 0 bis 10 Gew.-%, bevorzugt 0 bis 3 Gew.-%, Mattierungsmittel (Kieselsäurederivate...), 0 bis 2 Gew.-%, bevorzugt 0,5 bis 1,0 Gew.-%, Wachse (Polyethylen- und Polypropylenwachse z.B.), 0 bis 2,0 Gew.-%, bevorzugt 0,5 bis 1,0 Gew.-%, Emulgator (ethoxilierte Alkylphenole, ethoxilierte Fettsäuren), 0 bis 2,0 Gew.-%, bevorzugt 0,5 bis 1,0 Gew.-%, Entschäumer sowie 0 bis 10 Gew.-%, bevorzugt 0 bis 3 Gew.-% weiterer Additive, wie Weichmacher (ethoxiliertes Glycerin....), Thixotropierungsmittel (Polyacrylate, Polyurethane, Cellulose-Derivate...), Verlaufs-und Benetzungsmittel (Natriumsalze von Polyacrylaten...) sowie Filmbildehilfsmittel (Phosphorsäureester, Glykole). Die Gewichtsprozentangaben beziehen sich jeweils auf die Gesamtzusammensetzung der Lackkomponente I, also einschließlich evtl. anwesendem Verdünnungsmittel.

Die Herstellung der Lackkomponente I und II erfolgt in üblicher Weise durch Vermischen der Komponenten. Mitunter ist es angezeigt, eine Komponente, falls sie nicht in flüssiger Form anliegt, zunächst in einem Lösungsmittel zu lösen und diese Lösung mit den übrigen Komponenten zu vermischen.

Die vorstehend beschriebene wäßrige Beschichtungszusammensetzung läßt sich auch pigmentieren, wobei dann die Lackkomponente I 0 bis 40 Gew.-%, bevorzugt 0 bis 30 Gew.-%, jeweils bezogen auf das Gesamtgewicht der Lackkomponente I, Pigment enthält. Der jeweils optimale Pigmentgehalt hängt von der gewünschten Deckfähigkeit und dem eingesetzten Pigment ab und kann vom Durchschnittsfachmann mit Hilfe von einfach durchzuführenden Routineuntersuchungen gefunden werden.

Zur Einarbeitung der Pigmente können einerseits die verschiedenen Pigmente mit dem Bindemittel zusammen angemahlen werden oder die Lackkomponente I wird als Auflackgut für eine wäßrige Pigmentpaste verwendet.

Als Pigmente können alle anorganischen und organischen Pigmente eingesetzt werden, die sowohl wasserbenetzbar als auch bei den angewandten Temperaturen nicht sublimierbar sind und die sich unter den Verfahrens- und ph-Bedingungen nicht im Farbton verändern.

Beispiele für geeignete Pigmente sind Titandiozid des Rutiltyps, gelbe, rote und schwarze Eisenoxide, Ruß und Phthalocyanine. Bevorzugt wird Titandiozid als Pigment eingesetzt.

Weiterhin können den erfindungsgemäßen wäßrigen Zweikomponentenlacken, falls erforderlich, auch Füllstoffe, wie z.B. Kieselsäure, verschiedene Talkum-, Glimmer- und Kaolin-Typen sowie andere aluminium- und/oder magnesiumhaltige Silikate, Bariumsulfat usw., zugefügt werden. Die Füllstoffe werden in üblichen Mengen, bevorzugt zwischen 3 und 7 Gew.-%, bezogen auf das Gesamtgewicht der Lackkomponente I eingesetzt.

Wenn besonders hohe Anforderungen an die Oberflächengüte der Folien bzw. der aus ihnen hergestellten Teile gestellt werden, beispielsweise im Falle von Schrankfronten, können die beschichteten Folien mit einem konventionellen Lack mittels üblicher Lackiervorrichtungen beschichtet werden. Zur Überlackierung geeignet sind konventionelle säurehärtende Lacke, Lacke auf Basis von ungesättigten Polyesterharzen sowie Lacke auf Basis von Polyurethanharzen. Diese Lacke sind bekannt und im Handel unter verschiedenen Produktbezeichnungen erhältlich.

Die Holzlacke auf Basis von ungesättigten Polyestern enthalten üblicherweise Wachs, organische Lösungsmittel, Styrol, ungesättigtes Polyesterharz sowie Mattierungsmittel und/oder andere übliche Hilfs- und Zusatzstoffe in jeweils üblichen Mengen. Derartige Holzlacke sind beispielsweise zusammengesetzt aus 0,2 bis 1,0 Teilen Paraffinwachs, 7,0 bis 15,0 Teilen Styrol, 3,0 bis 8,0 Teilen eines oder mehrer organischer Lösungsmittel, 55,0 bis 70,0 Teilen ungesättigtem Polyesterharz sowie 10 bis 20 Teilen einer Siliciumdiozid-Paste und ggf. weiteren üblichen Hilfs- und Zusatzstoffen.

Die säurehärtenden Lacke enthalten üblicherweise neben Aminoplastharzen und Alkydharzen noch organisches Lösungsmittel, Wachs sowie übliche Hilfs- und Zusatzstoffe in üblichen Mengen. Derartige säurehärtende Holzlacke sind beispielsweise zusammengesetzt aus 15,0 bis 30,0 Teilen Aminoplastharz, bevorzugt Harnstoff-Formaldehydharz, 15,0 bis 30,0 Teilen organischem Lösungsmittel, 1,0 bis 3,0 Teilen Wachs, 0,5 bis 5,0 Teilen einer Alkoholkomponente und 35,0 bis 60,0 Teilen eines mittelöligen Alkydharzes.

Die erfindungsgemäßen wäßrigen Zweikomponentenlacke weisen den Vorteil auf, daß die resultierenden Beschichtungen (Finish-Folien, Endloskanten und Holzwerkstoffe) mit konventionellen Holzlacken überlackierbar sind und dabei auch ohne aufwendige Vorarbeiten und ohne den Zusatz von Weichmachern in hohen Anteilen eine sehr gute Haftung zum überlackierten Lack aufweisen. Außerdem weisen die resultierenden Beschichtungen, auch sie nicht mit einer weiteren Lackschicht versehen wurden, gute Gebrauchseigenschaften, wie z.B. gute Kratzfestigkeit, gute Chemikalienbeständigkeit und eine gute Vergrauungsstabilität auf. Weiterhin ist eine emissionsarme Trocknung der Überzüge möglich.

Die vorliegende Erfindung wird nun anhand von Ausführungsbeispielen näher erläutert. Falls nicht ausdrücklich etwas anderes angegeben ist, sind alle Angaben über Teile und Prozentsätze Gewichtsangaben.

1. Herstellung von hydroxylgruppenhaltigen Polyestern

Aus den in Tabelle 1 angegebenen Komponenten werden nach den üblichen Verfahren die hydroxylgruppenhaltigen Polyester 1 bis 2 sowie zum Vergleich die Polyester V1 bis V8 hergestellt, indem die einzelnen Komponenten in einem mit Rührer, Stickstoffzufuhr und beheizter Füllkörperkolonne ausgestatteten Reaktor innerhalb von 6 h auf 200°C erhitzt werden, wobei entstehendes Reaktionswasser abdestilliert wird. Die Veresterung wird solange bei 200°C fortgesetzt, bis die in Tabelle 2 angegebenen Kennzahlen erreicht sind.

2. Zum Überlackieren der Finish-Folien eingesetzte konventionelle Lacke

2.1. Säurehärtender Lack

Es wird ein handelsüblicher säurehärtender Lack auf Basis von 15,0 bis 30,0 Teilen eines isobutanolveretherten Harnstoff-Formaldehydharzes mit einer Viskosität von 2,3 bis 3,3 Pas bei 23°C, 15,0 bis 30,0 Teilen Toluol, 1,0 bis 3,0 Teilen Wachs, 0,5 bis 5,0 Teilen Ethanol und 35,0 bis 60,0 Teilen eines mittelöligen Alkydharzes auf der Basis von Juvandolfettsäure, Phthalsäureanhydrid, Trimethylolpropan und Pentaerythrit mit einer Säurezahl von kleiner 15 mgKOH/g eingesetzt.

2.2 Ungesättigter Polyester-Lack

Es wird ein handelsüblicher Lack auf Basis eines ungesättigten Polyesters eingesetzt, der zusammengesetzt ist aus 0,2 bis 1,0 Teilen Paraffinwachs, 7,0 bis 15,0 Teilen Styrol, 3,0 bis 8,0 Teilen organischem Lösungsmittel, 10,0 bis 20,0 Teilen Siliciumdioxidpaste und 55,0 bis 70,0 Teilen ungesättigtem Polyesterharz auf Basis von Maleinsäureanhydrid, Adipinsäure und Polypropylenglykol mit einer Säurezahl von 35 bis 40 mgKOH/g.

Beispiel 1

Zunächst wird folgendermaßen eine Lackkomponente I-1 hergestellt:
75 Teile einer handelsüblichen 86%igen Lösung eines veretherten Melamin-Formaldehyd-Harzes in Methanol/Ethanol
(Veretherungsalkohol Methanol Viskosität der Harzlösung 1,6 2,4 mPas bei 23°C) 1 Teil eines handelsüblichen Emulgators auf Basis eines ethoxilierten Phenolderivates, 19 Teile des Polyesters 1 und 5 Teile Ethanol werden unter Rühren vermischt.
100 Teile der so hergestellten Lackkomponente I-1 werden unter Rühren mit 20 Teilen einer wäßrigen p-Toluolsulfonsäure-Lösung aus 30 Teilen p-Toluolsulfonsäure und 70 Teilen Wasser (Lackkomponente II-1) versetzt.
Der so erhaltene Foliendeckstrich wird mit entionisiertem Wasser auf eine Viskosität von 25 s im Auslaufbecher nach DIN 4 bei 23°C eingestellt und dann mittels eines Drahtrakels auf ein Imprägnat (Gewicht des Imprägnats 85 g/m$^2$) aufgetragen (Naßfilmstärke 30 $\mu$m) und anschließend 30 s bei 160°C im Umluftofen getrocknet. Danach wurde die erhaltene Folie verschiedenen Prüfungen bezüglich der Gebrauchseigenschaften unterzogen. Die Prüfergebnisse sind in Tabelle 3 dargestellt.
Weiterhin wurde die erhaltene Folie unter Verwendung eines Harnstoffleims bei einer Temperatur von 150°C und einer Anpresskraft von 5 kp während einer Zeit von 30 s auf eine Spanplatte verpreßt.
Auf diesen Verbund wurden anschließend 60 g/m$^2$ (naß) von dem konventionellen säurehärtenden Lack 2.1 bzw. in einem zweiten Versuch 100 g/m$^2$ (naß) von dem konventionellen Polyester-Lack 2.2 aufgetragen. Nach 24 h Trocknung bei Raumtemperatur wurde die Haftung dieses konventionellen Lackes auf der Folienbeschichtung durch die Gitterschnittprüfung bestimmt. Die Prüfergebnisse sind in Tabelle 5 dargestellt.

Beispiel 2

Es wird analog Beispiel 1 eine Lackkomponente I-2 hergestellt, allerdings mit dem Unterschied, daß statt 19 Teilen des Polyesters 1 nun 19 Teile des Polyesters 2 eingesetzt werden. Die weitere Herstellung des Foliendeckstrichs 2, die Applikation und Aushärtung erfolgen analog Beispiel 1. Die Prüfergebnisse der Folie sind ebenfalls in Tabelle 3 dargestellt. Die Herstellung des Verbundes der Folie mit einer Spanplatte sowie der Überlackierung mit einem säurehärtenden Lack bzw. mit einem Lack auf Basis eines ungesättigten Polyesters und die Prüfung des Verbundes erfolgen analog Beispiel 1. Die Ergebnisse der Haftungsprüfung sind in Tabelle 4 dargestellt.

Vergleichsbeispiele 1 bis 8

Es werden analog Beispiel 1 verschiedene Lackkomponenten I-V1 bis I-V8 hergestellt, allerdings mit dem Unterschied, daß statt 19 Teilen des Polyesters 1 nun 19 Teile der Polyester V1 bis V8 eingesetzt werden.

Die Prüfung der Überlackierbarkeit und Weiterverarbeitung der Folien er- folgt analog Beispiel 1. Die Prüfung der Gebrauchs- eigenschaften der nicht überlackierten Folie erfolgt bei Beispiel V 7 ebenfalls analog Beispiel 1. Die entsprechenden Prüfergebnisse sind in den Tabellen 3 und 5 zusammengestellt.

Beispiel 3

Es wird zunächst eine Lackkomponente I-3 hergestellt, indem 30 Teile eines handelsüblichen wasserverdünnbaren Harnstoff-Formaldehydharzes (97,5 %ig in Methanol; Veretherungsalkohol = Methanol, Viskosität bei 23°C = 2,5 - 3,7 mPas), 30 Teile des in Beispiel 1 beschriebenen handelsüblichen Melamin-Formaldehydharzes, 20 Teile des Polyesters 1, 5 Teile Dipropylenglykolmonomethylether, 5 Teile eines handelsüblichen Mattierungsmittels unter Rühren vermischt. Die erhaltene Mischung wird dann mit 10 Teilen Wasser vermischt.

100 Teile der so hergestellten Lackkomponente I-3 werden unter Rühren mit 15 Teilen der in Beispiel 1 beschriebenen Lackkomponente II-1 versetzt. Der so erhaltene Foliendeckanstrich 3 wird mit entionisiertem Wasser auf eine Viskosität von 25 s im Auslaufbecher nach DIN 4 bei 23°C eingestellt. Die Applikation und Härtung des so erhaltenen Foliendeckstrichs 3, die Prüfung der resultierenden Folie sowie deren Weiterverarbeitung erfolgen analog Beispiel 1. Die entsprechenden Prüfergebnisse sind in den Tabellen 3 und 4 dargestellt.

Beispiel 4

Es wird zunächst eine Lackkomponente I-4 hergestellt, indem 35 Teile eines handelsüblichen mit Methanol verethertem Melamin-Formaldehydharzes (100%ig, Viskosität bei 23°C 3600 - 6900 mPas), 40 Teile des in Beispiel 3 beschriebenen handelsüblichen wasserverdünnbaren Harnstoff-Formaldehydharzes, 16 Teile des Polyesters 1, 4 Teile eines handelsüblichen Mattierungsmittels unter Rühren vermischt. Dann werden 15 Teile entionisiertes Wasser und 10 Teile Butylglykol zugefügt.

100 Teile der so hergestellten Lackkomponente I-4 werden unter Rühren mit 10 Teilen einer wäßrigen Lösung aus 35 Teilen Wasser, 25 Teilen Dimethylethanolamin und 40 Teilen p-Toluolsulfonsäure (Lackkomponente II-2) versetzt. Der so erhaltene Foliendeckstrich 4 wird mit entionisiertem Wasser auf eine Viskosität von 25 s im Auslaufbecher nach DIN 4 bei 23°C eingestellt. Die Applikation und Härtung des so erhaltenen Foliendeckstrichs 4, die Prüfung der resultierenden Folie sowie deren Weiterverarbeitung erfolgen analog Beispiel 1. Die entsprechenden Prüfergebnisse sind in den Tabellen 3 und 4 dargestellt.

Beispiel 5

Es wird zunächst eine Lackkomponente I - 5 hergestellt, indem 15 Teile eines handelsüblichen mit Methanol verethertem Melamin-Formaldehydharzes (100%ig, Viskosität bei 23°C 3600 -6900 mPas), 40 Teile des in Beispiel 3 beschriebenen handelsüblichen wasserverdünnbaren Harnstoff-Formaldehydharzes, 16 Teile des Polyesters 1, 4 Teile eines handelsüblichen Mattierungsmittels unter Rühren vermischt. Dann werden 15 Teile entionisiertes Wasser und 10 Teile Butylglykol zugefügt.

100 Teile der so hergestellten Lackkomponente I - 5 wurden unter Rühren mit 7,5 Teilen einer wäßrigen Lösung aus 50 Teilen entionisiertem Wasser und 50 Teilen Phosphorsäure (Lackkomponente II-3) versetzt. Der so erhaltene Foliendeckstrich 5 wird mit entionisiertem Wasser auf eine Viskosität von 25 s im Auslaufbecher nach DIN 4 bei 23°C eingestellt. Die Applikation und Härtung des so erhaltenen Foliendeckstrichs 5, die Prüfung der resultierenden Folie sowie deren Weiterverarbeitung erfolgen analog Beispiel 1. Die entsprechenden Prüfergebnisse sind in den Tabellen 3 und 4 dargestellt.

Tabelle 1: Zusammensetzung der Polyester 1 und 2 sowie V1 bis V8 in Molen

| Beispiel | 1 | 2 | V1 | V2 | V3 | V4 | V5 | V6 | V7 | V8 |
|---|---|---|---|---|---|---|---|---|---|---|
| Maleinsäureanhydrid | 1,0 | 1,0 | 1,0 | 0,5 | – | 1,0 | – | 1,0 | 1,0 | – |
| Bernsteinsäureanhydrid | – | – | – | – | – | – | 0,25 | – | – | 0,25 |
| Glutarsäure | – | – | – | – | – | – | 0,5 | – | – | 0,5 |
| Adipinsäure | – | – | – | – | 1,0 | – | 0,25 | – | – | 0,25 |
| Phthalsäureanhydrid | – | – | – | 0,5 | – | – | – | – | – | – |
| Diethylenglykol | – | – | 0,9 | 1,5 | – | – | – | – | 0,9 | – |
| Triethylenglykol | 1,0 | 0,25 | – | – | 1,5 | 1,5 | 1,0 | 1,5 | – | 0,25 |
| Polyethylenglykol 400[1] | 0,15 | 0,15 | – | – | – | – | – | – | – | 0,15 |
| Polyethylenglykol 1500[1] | – | – | 0,03 | – | – | – | – | – | 0,03 | – |
| TMPD-Glykol[2] | – | 0,75 | – | – | – | 0,5 | – | – | – | 0,75 |
| DMC[3] | – | – | – | – | – | – | 0,5 | – | – | – |
| Neopentylglykol | – | – | – | – | – | – | – | 0,5 | – | – |
| Diallylphthalat in Gew.-%[1] | – | – | – | – | – | – | – | – | 30 | – |

[1] bezogen auf Gesamtgewicht von Polyesterpolyol und Diallylphthalat

EP 0 511 976 B1

Erläuterungen zu Tabelle 1:

1)  Polyethylenglykol 400 bzw. 1500 ist Polyethylen-
    glykol mit einem zahlenmittleren Molekulargewicht
    von 400 bzw. 1500

2)  2,2,4-Trimethyl-1,3-pentandiol

3)  1,4-Dimethylolcyclohexan


Erläuterungen zu Tabelle 2:

1)  theoretisch berechnete OH-Zahl, unter der Vor-
    aussetzung von 0 % Glykolverlust und von keinen
    Nebenreaktionen
2)  theoretisch berechnetes $M_n$, unter der Voraus-
    setzung von 0 % Glykolverlust und von keinen Ne-
    benreaktionen
3)  Gemessen bei 23°C (mit dem ICI-Platte-Kegel-Vis-
    kosimeter)
4)  Viskosität einer 80 %igen Lösung in Butylglykol
    bei 23°C
5)  Viskosität einer 60 %igen Lösung in Butylglykol
    bei 23°C

Tabelle 2: Kennzahlen der Polyester 1 und 2 sowie V1 bis V8

| Beispiel | 1 | 2 | V1 | V2 | V3 | V4 | V5 | V6 | V7 | V8 |
|---|---|---|---|---|---|---|---|---|---|---|
| Festkörper (1 h/130°C) | > 97 | > 99 | > 98 | > 98 | > 98 | 83 | 97 | 83 | 70 | 97 |
| Säurezahl (mgKOH/g) | 25 | 28 | 35 | 30 | 25 | 9 | < 2 | 6 | 35 | < 2 |
| OH-Zahl (mgKOH/g)[1] | 82 | 86 | < 20 | 240 | 190 | 304 | 178 | 314 | < 20 | 58 |
| $M_n$[2] | 1050 | 980 | 2700 | 420 | 520 | 360 | 620 | 350 | 2700 | 1900 |
| Viskosität[3] (dPas) | 2,3[4] | 2,8[4] | – | 4,5[5] | 1,4[5] | 1,8[5] | 3,4[5] | 1,9[5] | – | 4,0[5] |
| Menge $a_1$ (Mol-%) | 100 | 100 | 100 | 50 | – | 100 | 25 | 100 | 100 | 25 |
| Menge $a_2$ (Mol-%) | – | – | – | – | 100 | – | 50 | – | – | 50 |
| Menge $a_3$ (Mol-%) | – | – | – | 50 | – | – | 25 | – | – | 25 |
| Menge $b_1$ (Mol-%) | 87 | 21,8 | 96,8 | 100 | 100 | 75 | 66,7 | 75 | 96,8 | 21,8 |
| Menge $b_2$ (Mol-%) | 13 | 13,0 | 3,2 | – | – | – | – | – | 3,2 | 13,0 |
| Menge $b_3$ (Mol-%) | – | 65,2 | – | – | – | 25 | 33,3 | 25 | – | 65,2 |

EP 0 511 976 B1

Tabelle 3: Gebrauchseigenschaften der nicht überlackierten Folie

| Beispiel | 1 | 2 | 3 | 4 | 5 | V7 |
|---|---|---|---|---|---|---|
| Glanz (60°) direkt nach Härtung | 13 E | 13 E | 11 E | 7 E | 4 E | 13 E |
| Glanz (60°) nach Lagerung[1] | 13 E | 13 E | 11 E | 7 E | 4 E | 10 E |
| Vergrauungsbest.[2] | 0 | 2 | 1 | 1 | 0 | 5 |
| Kratzfestigkeit[3] | 6 DH | 4 DH | 5 DH | 5 DH | 4 DH | 1 DH |

EP 0 511 976 B1

Erläuterungen zu Tabelle 3

1)   Der Lack wird mit einem Rakel (30 /um) auf
     ein Imprägnat (75 g/m$^2$) appliziert und bei
     160°C 30 Sek. im Umluftofen getrocknet.
     Die Dekorfolie wird halbiert. Eine Hälfte wird
     in einer Polyethylenfolie bei RT gelagert, die
     andere Hälfte 5 Tage bei 45°C im Umluftofen.
     Anschließend wird der Glanzgradunterschied der
     beiden Folienhälften beurteilt.

2)   Die Vergrauungsstabilität wird folgendermaßen gep
     rüft:

     Der Lack wird auf einem dunklen, vorzugsweise
     schwarzen Imprägnat (85 g/m$^2$) appliziert bei
     160°C, 30 Sekunden im Umluftofen getrocknet und
     bei 150°C unter 5 kp Druck innerhalb von 30 Se-
     kunden auf eine Spanplatte verpreßt. Die Lack-
     oberfläche wird auf einen 500 ml Erlenmeyerkol-
     ben gelegt, der zu 1/3 mit Wasser gefüllt ist.
     Das Wasser wird zum Sieden erhitzt. Nach 5 Mi-
     nuten Einwirkung von Wasserdampf wird die
     Fläche heruntergenommen und die Vergrauung nach
     weiteren 5 Minuten beurteilt (5 = deutliche
     Vergrauung, 0 = keine Vergrauung).

3)   Die Prüfung der Kratzfestigkeit erfolgt, indem
     der Lack auf einem dunklen, vorzugsweise
     schwarzen Imprägnat (85 g/m$^2$) appliziert, bei
     160°C 30 s im Umluftofen getrocknet und bei
     150°C unter 5 kp Druck innerhalb von 30 s auf
     eine Spanplatte verpreßt wird. Danach wird ein
     Holzspatel in Doppelhüben über die Lackober-
     fläche bewegt, bis die Oberfläche verletzt ist.
     Angegeben ist die jeweilige Zahl der Doppelhübe
     (DH).

Tabelle 4: Haftung konventioneller Holzlacke auf dem Foliendeckstrich

| Beispiel | 1 | 2 | 3 | 4 | 5 |
|---|---|---|---|---|---|
| Gitterschnitt[1] SH-Lack[2] | 1 | 1 | 1 | 1 | 1 |
| Gitterschnitt[1] UP-Lack[3] | 1 | 2 | 1 | 2 | 1 |

1) 1 = sehr gute Haftung; 5 = mangelhafte Haftung

2) säurehärtender Holzlack

3) Holzlack auf Basis eines ungesättigten Polyesters

EP 0 511 976 B1

Tabelle 5: Haftung konventioneller Holzlacke auf dem Foliendeckstrich

| Beispiel | V1 | V2 | V3 | V4 | V5 | V6 | V7 | V8 |
|---|---|---|---|---|---|---|---|---|
| Gitterschnitt[1] SH-Lack[2] | 4 | 4 | 5 | 3 | 5 | 4 | 2 | 5 |
| Gitterschnitt[1] UP-Lack[3] | 5 | 5 | 5 | 4-5 | 5 | 5 | 2 | 5 |

1)  1 = sehr gute Haftung; 5 = mangelhafte Haftung
2)  säurehärtender Holzlack
3)  Holzlack auf Basis eines ungesättigten Polyesters

Zusammenfassung der Prüfergebnisse:

Während bei den Beispielen 1 bis 5 stets eine gute Haftung und Überlackierbarkeit gegeben ist, erreicht man bei den Vergleichsbeispielen nur durch Zusatz eines hohen Anteils Diallylphthalat als Weichmacher eine gute Überlackierbarkeit. Ein hoher Anteil an Weichmacher führt jedoch unter den in der Praxis üblichen Trocknungsbedingungen zu Emissionen in Form eines bläulichen Rauchs.

Weiterhin ist in den Tabellen 3 und 4 zu erkennen, daß die resultierenden Beschichtungen der Beispiele 1

EP 0 511 976 B1

bis 5 sehr gute Gebrauchseigenschaften, insbesondere eine gute Glanzbeständigkeit, Vergrauungsbeständigkeit und gute Kratzfestigkeit aufweisen, so daß diese Folien auch ohne weitere Überlackierung eingesetzt werden können und dann gute Eigenschaften aufweisen. Bei dem Vergleichsbeispiel 7, bei dem ein hoher Weichmacheranteil Rezeptbestandteil ist, treten Probleme bezüglich Kratzfestigkeit, Vergrauungsbeständigkeit und Glanzbeständigkeit auf, die die praktische Verwendbarkeit derartiger Folien ohne weitere Überlackierung weit einschränken.

**Patentansprüche**
**Patentansprüche für folgende Vertragsstaaten : AT, BE, CH, LI, DE, DK, FR, GB, IT, NL, SE**

1.  Wäßrige Beschichtungszusammensetzung, insbesondere zur Beschichtung von Finish-Folien und Endloskanten, enthaltend eine Lackkomponente I, die

    A) 15 bis 70 Gew.-%, bevorzugt 30 bis 55 Gew.-%, bezogen auf das Gesamtgewicht der Lackkomponente I, eines oder mehrerer wasserverdünnbarer Melamin- und/oder Harnstoffharze

    B) 10 bis 40 Gew.-%, bevorzugt 15 bis 25 Gew.-%, bezogen auf das Gesamtgewicht der Lackkomponente I, eines oder mehrerer hydroxylgruppenhaltiger Polyester sowie

    C) ggf. Pigmente und/oder Füllstoffe sowie ggf. übliche Hilfs- und Zusatzstoffe und

    D) ggf. Verdünnungsmittel, bestehend zu mindestens 50 Gew.-% aus Wasser und ggf. organischen Lösungsmitteln,

    enthält und eine Lackkomponente II, die 0,5 bis 50 Gew.%, bezogen auf das Gesamtgewicht der Komponenten A bis C, eines sauren Härtungskatalysators enthält, dadurch gekennzeichnet, daß die als Komponente B eingesetzten Polyester hergestellt worden sind aus

    a) 33 bis 55 Mol-% Dicarbonsäuren und

    b) 67 bis 45 Mol-% Di- und/oder Polyolen,

    wobei die Dicarbonsäurekomponente a eine Mischung aus

    $a_1$) 50 bis 100 Mol-% mindestens einer olefinisch ungesättigten, aliphatischen Dicarbonsäure

    $a_2$) 0 bis 50 Mol-% mindestens einer gesättigten, aliphatischen Dicarbonsäure und

    $a_3$) 0 bis 50 Mol-% mindestens einer aromatischen Dicarbonsäure

    und die Di- und/oder Polyolkomponente b eine Mischung aus

    $b_1$) 20 bis 90 Mol-% mindestens eines monomeren und/- oder oligomeren Glykols mit 2 bis 4 C-Atomen pro Glykolsegment und mit zahlenmittleren Molekulargewichten kleiner/gleich 200

    $b_2$) 5 bis 30 Mol-% mindestens eines polymeren Glykols mit 2 bis 4 C-Atomen pro Glykolsegment und mit einem zahlenmittleren Molekulargewicht zwischen 300 und 1000 und

    $b_3$) 0 bis 70 Mol-% mindestens eines Polyols mit 2 bis 4 OH-Gruppen und mit 4 bis 10 C-Atomen pro Molekül, ausgenommen die als Komponente $b_1$ eingesetzten Glykole

    ist, mit der Maßgabe, daß sowohl die Summe der Anteile der Komponenten $a_1$ bis $a_3$ als auch die Summe der Anteile der Komponenten $b_1$ bis $b_3$ als auch die Summe der Anteile der Komponenten a und b jeweils für sich 100 Mol-% betragen.

2.  Wäßrige Beschichtungszusammensetzung nach Anspruch 1, dadurch gekennzeichnet, daß die Dicarbonsäurekomponente a zu 100 Mol-% aus der Komponente $a_1$ besteht.

3.  Wäßrige Beschichtungszusammensetzung nach Anspruch 1 oder 2, dadurch gekennzeichnet, daß die Di- und/oder Polyolkomponente aus

    $b_1$) 25 bis 50 Mol-% der Komponente $b_1$,

    $b_2$) 5 bis 20 Mol-% der Komponente $b_2$ und

    $b_3$) 45 bis 70 Mol-% der Komponente $b_3$

    besteht.

4.  Wäßrige Beschichtungszusammensetzung nach einem der Ansprüche 1 bis 3, dadurch gekennzeichnet, daß die Diund/oder Polyolkomponente b aus

    $b_1$) 75 bis 90 Mol-% der Komponente $b_1$ und

    $b_2$) 10 bis 25 Mol-% der Komponente $b_2$

    besteht.

5.  Wäßrige Beschichtungszusammensetzung nach einem der Ansprüche 1 bis 4, dadurch gekennzeichnet, daß die als Komponente B eingesetzten Polyester hergestellt worden sind aus

    a) 43 bis 48 Mol-% Dicarbonsäure und

16

b) 57 bis 52 Mol-% Di- und/oder Polyol.

6. Wäßrige Beschichtungszusammensetzung nach einem der An rüche 1 bis 5, dadurch gekennzeichnet, daß als Komponente A mit Methanol veretherte Melamin-Formaldehydharze und/oder mit Methanol veretherte Harnstoffharze eingesetzt werden.

7. Verfahren zum Beschichten von Finish-Folien und Endloskanten, bei dem
    I) eine wäßrige Beschichtungszusammensetzung appliziert wird, enthaltend eine Lackkomponente I und eine Lackkomponente II, die bevorzugt unmittelbar vor der Applikation gemischt werden,
    II) der resultierende Naßfilm während einer Zeit von 8 bis 50 s bei einer Temperatur zwischen 90 und 200°C eingebrannt wird,
    III) die resultierende Beschichtung ggf. mit einem weiteren Lack überlackiert wird,
    wobei die Lackkomponente I
    A) 15 bis 70 Gew.-%, bevorzugt 30 bis 55 Gew.-%, bezogen auf das Gesamtgewicht der Lackkomponente I, eines oder mehrerer wasserverdünnbarer Melamin- und/oder Harnstoffharze
    B) 10 bis 40 Gew.-%, bevorzugt 15 bis 25 Gew.-%, bezogen auf das Gesamtgewicht der Lackkomponente I, eines oder mehrerer hydroxylgruppenhaltiger Polyester sowie
    C) ggf. Pigmente und/oder Füllstoff sowie ggf. übliche Hilfs- und Zusatzstoffe und
    D) ggf. Verdünnungsmittel, bestehend zu mindestens 50 Gew.% aus Wasser und ggf. organischen Lösungsmitteln
    enthält und die Lackkomponente II 0,5 bis 50 Gew.-%, bezogen auf das Gesamtgewicht der Komponenten A bis C, eines sauren Härtungskatalysators enthält, dadurch gekennzeichnet, daß die als Komponente B eingesetzten Polyester hergestellt worden sind aus
    a) 33 bis 55 Mol-% Dicarbonsäuren und
    b) 67 bis 45 Mol-% Di- und/oder Polyolen,
    wobei die Dicarbonsäurekomponente a eine Mischung aus
    $a_1$) 50 bis 100 Mol-% mindestens einer olefinisch ungesättigten, aliphatischen Dicarbonsäure
    $a_2$) 0 bis 50 Mol-% mindestens einer gesättigten, aliphatischen Dicarbonsäure und
    $a_3$) 0 bis 50 Mol-% mindestens einer aromatischen Dicarbonsäure
    und die Di- und/oder Polyolkomponente b eine Mischung aus
    $b_1$) 20 bis 90 Mol-% mindestens eines monomeren und/-oder oligomeren Glykols mit 2 bis 4 C-Atomen pro Glykolsegment und mit zahlenmittleren Molekulargewichten kleiner/gleich 200
    $b_2$) 5 bis 30 Mol-% mindestens eines polymeren Glykols mit 2 bis 4 C-Atomen pro Glykolsegment und mit einem zahlenmittleren Molekulargewicht zwischen 300 und 1000 und
    $b_3$) 0 bis 70 Mol-% mindestens eines Polyols mit 2 bis 4 OH-Gruppen und mit 4 bis 10 C-Atomen pro Molekül, ausgenommen die als Komponente $b_1$ eingesetzten Glykole
    ist, mit der Maßgabe, daß sowohl die Summe der Anteile der Komponenten $a_1$ bis $a_3$ als auch die Summe der Anteile der Komponenten $b_1$ bis $b_3$ als auch die Summe
    der Anteile der Komponenten a und b jeweils für sich 100 Mol-% betragen.

8. Verfahren nach Anspruch 7, dadurch gekennzeichnet, daß die Dicarbonsäurekomponente a zu 100 Mol-% aus der Komponente $a_1$ besteht.

9. Verfahren nach Anspruch 7 oder 8, dadurch gekennzeichnet, daß die Di- und/oder Polyolkomponente b aus
    $b_1$) 25 bis 50 Mol-% der Komponente $b_1$,
    $b_2$) 5 bis 20 Mol-% der Komponente $b_2$ und
    $b_3$) 45 bis 70 Mol-% der Komponente $b_3$
    besteht.

10. Verfahren nach einem der Ansprüche 7 bis 9, dadurch gekennzeichnet, daß die Dicarbonsäurekomponente a zu 100 Mol-% aus der Komponente $a_1$ und die Di- und/oder Polyolkomponente b aus
    $b_1$) 75 bis 90 Mol-% der Komponente $b_1$ und
    $b_2$) 10 bis 25 Mol-% der Komponente $b_2$
    besteht.

11. Verfahren nach einem der Ansprüche 7 bis 10, dadurch gekennzeichnet, daß die als Komponente B eingesetzten Polyester hergestellt worden sind aus

EP 0 511 976 B1

a) 43 bis 48 Mol-% Dicarbonsäure und

b) 57 bis 52 Mol-% Di- und/oder Polyol.

**12.** Verfahren nach einem der Ansprüche 7 bis 11, dadurch gekennzeichnet, daß als Komponente A mit Methanol veretherte Melamin-Formaldehydharze und/oder Methanol veretherte Harnstoffharze eingesetzt werden.

**13.** Finish-Folie oder Endloskante, dadurch gekennzeichnet, daß sie nach einem der Verfahren nach Anspruch 7 bis 12 beschichtet werden ist.

**14.** Verwendung der Finish-Folien oder Endloskanten nach Anspruch 13 zur Verleimung mit Span- oder Hartfaserplatten.

**Patentansprüche für folgenden Vertragsstaat : ES**

**1.** Verfahren zur Herstellung einer wäßrigen Beschichtungszusammensetzung, insbesondere zur Beschichtung von Finish-Folien und Endloskanten, enthaltend eine Lackkomponente I, die

A) 15 - 70 Gew.-%, bevorzugt 30 bis 55 Gew.-%, bezogen auf das Gesamtgewicht der Lackkomponente I, eines oder mehrerer wasserverdünnbarer Melamin- und/oder Harnstoffharze,

B) 10 bis 40 Gew.-%, bevorzugt 15 bis 25 Gew.-%, bezogen auf das Gesamtgewicht der Lackkomponente I, eines oder mehrerer hydroxylgruppenhaltiger Polyester sowie

C) ggf. Pigmente und/oder Füllstoffe sowie ggf. übliche Hilfs- und Zusatzstoffe und

D) ggf. Verdünnungsmittel, bestehend zu mindestens 50 Gew.-% aus Wasser und ggf. organischen Lösungsmitteln,

enthält und eine Lackkomponente II, die 0,5 bis 50 Gew.-%, bezogen auf das Gesamtgewicht der Komponenten A bis C, eines sauren Härtungskatalysators enthält, bei dem die Lackkomponenten (I) und (II) vor der Applikation gemischt werden, dadurch gekennzeichnet, daß die als Komponente B eingesetzten Polyester hergestellt werden aus

a) 33 bis 55 Mol-% Dicarbonsäuren und

b) 67 bis 45 Mol-% Di- und/oder Polyolen,

wobei die Dicarbonsäurekomponente a eine Mischung aus

$a_1$) 50 bis 100 Mol-% mindestens einer olefinisch ungesättigten, aliphatischen Dicarbonsäure

$a_2$) 0 bis 50 Mol-% mindestens einer gesättigten, aliphatischen Dicarbonsäure und

$a_3$) 0 bis 50 Mol-% mindestens einer aromatischen Dicarbonsäure

und die Di- und/oder Polyolkomponente b eine Mischung aus

$b_1$) 20 bis 90 Mol-% mindestens eines monomeren und/-oder oligomeren Glykols mit 2 bis 4 C-Atomen pro Glykolsegment und mit einem zahlenmittleren Molekulargewicht $\leq 200$

$b_2$) 5 bis 30 Mol-% mindestens eines polymeren Glykols mit 2 bis 4 C-Atomen pro Glykolsegment und mit einem zahlenmittleren Molekulargewicht zwischen 300 und 1000 und

$b_3$) 0 bis 70 Mol-% mindestens eines Polyols mit 2 bis 4 OH-Gruppen und mit 4 bis 10 C-Atomen pro Molekül, ausgenommen die als Komponente $b_1$ eingesetzten Glykole

ist, mit der Maßgabe, daß sowohl die Summe der Anteile der Komponenten $a_1$ bis $a_3$ als auch die Summe der Anteile der Komponenten $b_1$ bis $b_3$ als auch die Summe der Anteile der Komponenten a und b jeweils für sich 100 Mol-% beträgt.

**2.** Verfahren nach Anspruch 1, dadurch gekennzeichnet, daß die Dicarbonsäurekomponente a zu 100 Mol-% aus der Komponente $a_1$ besteht.

**3.** Verfahren nach Anspruch 1 und 2, dadurch gekennzeichnet, daß die Di- und/oder Polyolkomponente aus

$b_1$) 25 bis 50 Mol-% der Komponente $b_1$,

$b_2$) 5 bis 20 Mol-% der Komponente $b_2$ und

$b_3$) 45 bis 70 Mol-% der Komponente $b_3$

besteht.

**4.** Verfahren nach einem der Ansprüche 1 bis 3, dadurch gekennzeichnet, daß die Di- und/oder Polyolkomponente aus

$b_1$) 75 bis 90 Mol-% der Komponente $b_1$ und

18

$b_2$) 10 bis 25 Mol-% der Komponente $b_2$

besteht.

5. Verfahren nach einem der Ansprüche 1 bis 4, dadurch gekennzeichnet, daß die als Komponente B eingesetzten Polyester hergestellt werden aus

a) 43 bis 48 Mol-% Dicarbonsäure und

b) 57 bis 52 Mol-% Di- und/oder Polyol.

6. Verfahren nach einem der Ansprüche 1 bis 5, dadurch gekennzeichnet, daß als Komponente A mit Methanol veretherte Melamin-Formaldehydharze und/oder mit Methanol veretherte Harnstoffharze eingesetzt werden.

7. Verfahren zum Beschichten von Finish-Folien und Endloskanten, bei dem

I) eine wäßrige Beschichtungszusammensetzung appliziert wird, enthaltend eine Lackkomponente I und eine Lackkomponente II, die bevorzugt unmittelbar vor der Applikation gemischt werden,

II) der resultierende Naßfilm während einer Zeit von 8 bis 50 s bei einer Temperatur zwischen 90 und 200 ° C eingebrannt wird,

III) die resultierende Beschichtung ggf. mit einem weiteren Lack überlackiert wird,

wobei die Lackkomponente I

A) 15 bis 70 Gew.-%, bevorzugt 30 bis 55 Gew.-%, bezogen auf das Gesamtgewicht der Lackkomponente I, eines oder mehrerer wasserverdünnbarer Melamin- und/oder Harnstoffharze,

B) 10 bis 40 Gew.-%, bevorzugt 15 bis 25 Gew.-%, bezogen auf das Gesamtgewicht der Lackkomponente I, eines oder mehrerer hydroxylgruppenhaltiger Polyester sowie

c) ggf. Pigmente und/oder Füllstoffe sowie ggf. übliche Hilfs- und Zusatzstoffe und

d) ggf. Verdünnungsmittel, bestehend zu mindestens 50 Gew.-% aus Wasser und ggf. organischen Lösungsmitteln

enthält und die Lackkomponente II 0,5 bis 50 Gew.-%, bezogen auf das Gesamtgewicht der Komponenten A bis C, eines sauren Härtungskatalysators enthält, dadurch gekennzeichnet, daß die als Komponente B eingesetzten Polyester hergestellt worden sind aus

a) 33 bis 55 Mol-% Dicarbonsäuren und

b) 67 bis 45 Mol-% Di- und/oder Polyolen,

wobei die Dicarbonsäurekomponente a eine Mischung aus

$a_1$) 50 bis 100 Mol-% mindestens einer olefinisch ungesättigten, aliphatischen Dicarbonsäure

$a_2$) 0 bis 50 Mol-% mindestens einer gesättigten, aliphatischen Dicarbonsäure und

$a_3$) 0 bis 50 Mol-% mindestens einer aromatischen Dicarbonsäure

und die Di- und/oder Polyolkomponente b eine Mischung aus

$b_1$) 20 bis 90 Mol-% mindestens eines monomeren und/-oder oligomeren Glykols mit 2 bis 4 C-Atomen pro Glykolsegment und mit einem zahlenmittleren Molekulargewicht $\leq$ 200

$b_2$) 5 bis 30 Mol-% mindestens eines polymeren Glykols mit 2 bis 4 C-Atomen pro Glykolsegment und mit einem zahlenmittleren Molekulargewicht zwischen 300 und 1000 und

$b_3$) 0 bis 70 Mol-% mindestens eines Polyols mit 2 bis 4 OH-Gruppen und mit 4 bis 10 C-Atomen pro Molekül, ausgenommen die als Komponente $b_1$ eingesetzten Glykole

ist, mit der Maßgabe, daß sowohl die Summe der Anteile der Komponenten $a_1$ bis $a_3$ als auch die Summe der Anteile der Komponenten $b_1$ bis $b_3$ als auch die Summe der Anteile der Komponenten a und b jeweils für sich 100 Mol-% beträgt.

8. Verfahren nach Anspruch 7, dadurch gekennzeichnet, daß die Dicarbonsäurekomponente a zu 100 Mol-% aus der Komponente $a_1$ besteht.

9. Verfahren nach Anspruch 7 oder 8, dadurch gekennzeichnet, daß die Di- und/oder Polyolkomponente b aus

$b_1$) 25 bis 50 Mol-% der Komponente $b_1$,

$b_2$) 5 bis 20 Mol-% der Komponente $b_2$ und

$b_3$) 45 bis 70 Mol-% der Komponente $b_3$

besteht.

10. Verfahren nach einem der Ansprüche 7 bis 9, dadurch gekennzeichnet, daß die Dicarbonsäurekomponente a zu 100 Mol-% aus der Komponente $a_1$ und die Di- und/oder Polyolkomponente b aus

b$_1$) 75 bis 90 Mol-% der Komponente b$_1$ und
b$_2$) 10 bis 25 Mol-% der Komponente b$_2$
besteht.

**11.** Verfahren nach einem der Ansprüche 7 bis 10, dadurch gekennzeichnet, daß die als Komponente B eingesetzten Polyester hergestellt worden sind aus
a) 43 bis 48 Mol-% Dicarbonsäure und
b) 57 bis 52 Mol-% Di- und/oder Polyol.

**12.** Verfahren nach einem der Ansprüche 7 bis 11, dadurch gekennzeichnet, daß als Komponente A mit Methanol veretherte Melamin-Formaldehydharze und/oder mit Methanol veretherte Harnstoffharze eingesetzt werden.

**13.** Verwendung von Finish-Folien oder Endloskanten, die nach einem der Verfahren nach Anspruch 7 bis 12 beschichtet worden sind, zur Verleimung mit Span- oder Hartfaserplatten.

**Claims**
**Claims for the following Contracting States : AT, BE, CH, LI, DE, DK, FR, GB, IT, NL, SE**

**1.** Aqueous coating composition, in particular for the coating of finish sheeting and continuous edging, which comprises a varnish component I containing
A) 15 to 70% by weight, preferably 30 to 55% by weight, based on the total weight of the varnish component I, of one or more water-thinnable melamine and/or urea resins
B) 10 to 40% by weight, preferably 15 to 25% by weight, based on the total weight of the varnish component I, of one or more hydroxyl-containing polyesters and,
C) if appropriate, pigments and/or fillers as well as, if appropriate, customary auxiliaries and additives and,
D) if appropriate, thinners, comprising at least 50% by weight of water and, if appropriate, organic solvents,
and a varnish component II containing 0.5 to 50% by weight, based on the total weight of the components A to C, of an acidic curing catalyst, characterized in that the polyesters used as component B have been prepared from
a) 33 to 55 mol% of dicarboxylic acids and
b) 67 to 45 mol% of diols and/or polyols,
the dicarboxylic acid component a being a mixture of
a$_1$) 50 to 100 mol% of at least one olefinically unsaturated aliphatic dicarboxylic acid
a$_2$) 0 to 50 mol% of at least one saturated aliphatic dicarboxylic acid and
a$_3$) 0 to 50 mol% of at least one aromatic dicarboxylic acid
and the diol and/or polyol component b being a mixture of
b$_1$) 20 to 90 mol% of at least one monomeric and/or oligomeric glycol having 2 to 4 carbon atoms per glycol segment and a number average molecular weight less than/equal to 200
b$_2$) 5 to 30 mol% of at least one polymeric glycol having 2 to 4 carbon atoms per glycol segment and a number average molecular weight between 300 and 1000 and
b$_3$) 0 to 70 mol% of at least one polyol having 2 to 4 OH groups and 4 to 10 carbon atoms per molecule, except the glycols used as component b$_1$,
with the proviso that the total of the amounts of the components a$_1$ to a$_3$ as well as the total of the amounts of the components b$_1$ to b$_3$ as well as the total of the amounts of the components a and b are in each individual case 100 mol%.

**2.** Aqueous coating composition according to Claim 1, characterized in that the dicarboxylic acid component a consists of 100 mol% of the component a$_1$.

**3.** Aqueous coating composition according to Claim 1 or 2, characterized in that the diol and/or polyol component consists of
b$_1$) 25 to 50 mol% of the component b$_1$,
b$_2$) 5 to 20 mol% of the component b$_2$ and
b$_3$) 45 to 75 mol% of the component b$_3$.

4. Aqueous coating composition according to any one of Claims 1 to 3, characterized in that the diol and/or polyol component b consists of
$b_1$) 75 to 90 mol% of the component $b_1$ and
$b_2$) 10 to 25 mol% of the component $b_2$.

5. Aqueous coating composition according to any one of Claims 1 to 4, characterized in that the polyesters used as component B are prepared from
a) 43 to 48 mol% of dicarboxylic acid and
b) 57 to 52 mol% of diol and/or polyol.

6. Aqueous coating composition according to any one of Claims 1 to 5, characterized in that methanol-etherified melamine-formaldehyde resins and/or methanol-etherified urea resins are used as component A.

7. Process for coating finish sheeting and endless edging, comprising
I) an aqueous coating composition, containing a varnish component I and a varnish component II which are mixed preferably immediately prior to application, being applied,
II) the resultant wet film being baked in for 8 to 50 seconds at a temperature of between 90 and 200 °C,
III) if desired, the resultant coating being further coated with another varnish,
the varnish component I containing
A) 15 to 70% by weight, preferably 30 to 55% by weight, based on the total weight of the varnish component I, of one or more water-thinnable melamine and/or urea resins
B) 10 to 40% by weight, preferably 15 to 25% by weight, based on the total weight of the varnish component I, of one or more hydroxyl-containing polyesters and,
C) if appropriate, pigments and/or fillers as well as, if appropriate, customary auxiliaries and additives and,
D) if appropriate, thinners, comprising at least 50% by weight of water and, if appropriate, organic solvents,
and a varnish component II containing 0.5 to 50% by weight, based on the total weight of the components A to C, of an acidic curing catalyst, characterized in that the polyesters used as the component B have been prepared from
a) 33 to 55 mol% of dicarboxylic acids and
b) 67 to 45 mol% of diols and/or polyols,
the dicarboxylic acid component a being a mixture of
$a_1$) 50 to 100 mol% of at least one olefinically unsaturated aliphatic dicarboxylic acid
$a_2$) 0 to 50 mol% of at least one saturated aliphatic dicarboxylic acid and
$a_3$) 0 to 50 mol% of at least one aromatic dicarboxylic acid
and the diol and/or polyol component b being a mixture of
$b_1$) 20 to 90 mol% of at least one monomeric and/or oligomeric glycol having 2 to 4 carbon atoms per glycol segment and a number average molecular weight less than/equal to 200
$b_2$) 5 to 30 mol% of at least one polymeric glycol having 2 to 4 carbon atoms per glycol segment and a number average molecular weight between 300 and 1000 and
$b_3$) 0 to 70 mol% of at least one polyol having 2 to 4 OH groups and 4 to 10 carbon atoms per molecule, except the glycols used as component $b_1$,
with the proviso that the total of the amounts of the components $a_1$ to $a_3$ as well as the total of the amounts of the components $b_1$ to $b_3$ as well as the total of the amounts of the components a and b are in each individual case 100 mol%.

8. Process according to Claim 7, characterized in that the dicarboxylic acid component a consists of 100 mol% of the component $a_1$.

9. Process according to Claim 7 or 8, characterized in that the diol and/or polyol component b consists of
$b_1$) 25 to 50 mol% of the component $b_1$,
$b_2$) 5 to 20 mol% of the component $b_2$ and
$b_3$) 45 to 70 mol% of the component $b_3$.

EP 0 511 976 B1

**10.** Process according to any one of Claims 7 to 9, characterized in that the dicarboxylic acid component a consists of 100 mol% of the component $a_1$ and the diol and/or polyol component b consists of
$b_1$) 75 to 90 mol% of the component $b_1$ and
$b_2$) 10 to 25 mol% of the component $b_2$.

**11.** Process according to any one of Claims 7 to 10, characterized in that the polyesters used as component B have been prepared from
a) 43 to 48 mol% of a dicarboxylic acid and
b) 57 to 52 mol% of a diol and/or a polyol.

**12.** Process according to any one of Claims 7 to 11, characterized in that methanol-etherified melamine-formaldehyde resins and/or methanol-etherified urea resins are used as component A.

**13.** Finish sheeting or continuous edging, characterized in that it has been coated by one of the processes as claimed in claims 7 to 12.

**14.** Use of the finish sheeting or continuous edging according to Claim 13 for gluing to chipboard or hardboard.

**Claims for the following Contracting State : ES**

**1.** Process for the preparation of an aqueous coating composition, in particular for the coating of finish sheeting and continuous edging, which comprises a varnish component I containing
A) 15 to 70% by weight, preferably 30 to 55% by weight, based on the total weight of the varnish component I, of one or more water-thinnable melamine and/or urea resins
B) 10 to 40% by weight, preferably 15 to 25% by weight, based on the total weight of the varnish component I, of one or more hydroxyl-containing polyesters and,
C) if appropriate, pigments and/or fillers as well as, if appropriate, customary auxiliaries and additives and,
D) if appropriate, thinners, comprising at least 50% by weight of water and, if appropriate, organic solvents,
and a varnish component II containing 0.5 to 50% by weight, based on the total weight of the components A to C, of an acidic curing catalyst, in which process the varnish components (I) and (II) are mixed prior to application, characterized in that the polyesters used as component B are prepared from
a) 33 to 55 mol% of dicarboxylic acids and
b) 67 to 45 mol% of diols and/or polyols,
the dicarboxylic acid component a being a mixture of
$a_1$) 50 to 100 mol% of at least one olefinically unsaturated aliphatic dicarboxylic acid
$a_2$) 0 to 50 mol% of at least one saturated aliphatic dicarboxylic acid and
$a_3$) 0 to 50 mol% of at least one aromatic dicarboxylic acid
and the diol and/or polyol component b being a mixture of
$b_1$) 20 to 90 mol% of at least one monomeric and/or oligomeric glycol having 2 to 4 carbon atoms per glycol segment and a number average molecular weight $\leq 200$
$b_2$) 5 to 30 mol% of at least one polymeric glycol having 2 to 4 carbon atoms per glycol segment and a number average molecular weight between 300 and 1000 and
$b_3$) 0 to 70 mol% of at least one polyol having 2 to 4 OH groups and 4 to 10 carbon atoms per molecule, except the glycols used as component $b_1$,
with the proviso that the total of the amounts of the components $a_1$ to $a_3$ as well as the total of the amounts of the components $b_1$ to $b_3$ as well as the total of the amounts of the components a and b are in each individual case 100 mol%.

**2.** Process according to Claim 1, characterized in that the dicarboxylic acid component a consists of 100 mol% of the component $a_1$.

**3.** Process according to Claim 1 or 2, characterized in that the diol and/or polyol component consists of
$b_1$) 25 to 50 mol% of the component $b_1$,
$b_2$) 5 to 20 mol% of the component $b_2$ and

22

b$_3$) 45 to 75 mol% of the component b$_3$.

4. Process according to any one of Claims 1 to 3, characterized in that the diol and/or polyol component b consists of

b$_1$) 75 to 90 mol% of the component b$_1$ and

b$_2$) 10 to 25 mol% of the component b$_2$.

5. Process according to any one of Claims 1 to 4, characterized in that the polyesters used as component B are prepared from

a) 43 to 48 mol% of dicarboxylic acid and

b) 57 to 52 mol% of diol and/or polyol.

6. Process according to any one of Claims 1 to 5, characterized in that methanol-etherified melamine-formaldehyde resins and/or methanol-etherified urea resins are used as component A.

7. Process for coating finish sheeting and endless edging, comprising

I) an aqueous coating composition, containing a varnish component I and a varnish component II which are mixed preferably immediately prior to application, being applied,

II) the resultant wet film being baked in for 8 to 50 seconds at a temperature of between 90 and 200°C,

III) if desired, the resultant coating being further coated with another varnish,

the varnish component I containing

A) 15 to 70% by weight, preferably 30 to 55% by weight, based on the total weight of the varnish component I, of one or more water-thinnable melamine and/or urea resins

B) 10 to 40% by weight, preferably 15 to 25% by weight, based on the total weight of the varnish component I, of one or more hydroxyl-containing polyesters and,

c) if appropriate, pigments and/or fillers as well as, if appropriate, customary auxiliaries and additives and,

d) if appropriate, thinners, comprising at least 50% by weight of water and, if appropriate, organic solvents,

and a varnish component II containing 0.5 to 50% by weight, based on the total weight of the components A to C, of an acidic curing catalyst, characterized in that the polyesters used as the component B have been prepared from

a) 33 to 55 mol% of dicarboxylic acids and

b) 67 to 45 mol% of diols and/or polyols,

the dicarboxylic acid component a being a mixture of

a$_1$) 50 to 100 mol% of at least one olefinically unsaturated aliphatic dicarboxylic acid

a$_2$) 0 to 50 mol% of at least one saturated aliphatic dicarboxylic acid and

a$_3$) 0 to 50 mol% of at least one aromatic dicarboxylic acid

and the diol and/or polyol component b being a mixture of

b$_1$) 20 to 90 mol% of at least one monomeric and/or oligomeric glycol having 2 to 4 carbon atoms per glycol segment and a number average molecular weight $\leq$ 200

b$_2$) 5 to 30 mol% of at least one polymeric glycol having 2 to 4 carbon atoms per glycol segment and a number average molecular weight between 300 and 1000 and

b$_3$) 0 to 70 mol% of at least one polyol having 2 to 4 OH groups and 4 to 10 carbon atoms per molecule, except the glycols used as component b$_1$,

with the proviso that the total of the amounts of the components a$_1$ to a$_3$ as well as the total of the amounts of the components b$_1$ to b$_3$ as well as the total of the amounts of the components a and b are in each individual case 100 mol%.

8. Process according to Claim 7, characterized in that the dicarboxylic acid component a consists of 100 mol% of the component a$_1$.

9. Process according to Claim 7 or 8, characterized in that the diol and/or polyol component b consists of

b$_1$) 25 to 50 mol% of the component b$_1$,

b$_2$) 5 to 20 mol% of the component b$_2$ and

b$_3$) 45 to 70 mol% of the component b$_3$.

**10.** Process according to any one of Claims 7 to 9, characterized in that the dicarboxylic acid component a consists of 100 mol% of the component $a_1$ and the diol and/or polyol component b consists of

b₁) 75 to 90 mol% of the component $b_1$ and

b₂) 10 to 25 mol% of the component $b_2$.

**11.** Process according to any one of Claims 7 to 10, characterized in that the polyesters used as component B have been prepared from

a) 43 to 48 mol% of a dicarboxylic acid and

b) 57 to 52 mol% of a diol and/or a polyol.

**12.** Process according to any one of Claims 7 to 11, characterized in that methanol-etherified melamine-formaldehyde resins and/or methanol-etherified urea resins are used as component A.

**13.** Use of finish sheeting or continuous edging which has been coated according to one of the processes according to Claim 7 to 12 for gluing to chipboard or hardboard.

**Revendications**

**Revendications pour les Etats contractants suivants : AT, BE, CH, LI, DE, DK, FR, GB, IT, NL, SE**

**1.** Composition de revêtement aqueuse, en particulier pour le revêtement de feuilles de finition et de bords continus, contenant un composant de laque I, qui contient

A) de 15 à 70 % en poids, de préférence de 30 à 55 % en poids, par rapport au poids total du composant de laque I, d'une ou de plusieurs résines de mélamine et/ou d'urée diluables à l'eau,

B) de 10 à 40 % en poids, de préférence de 15 à 25 % en poids, par rapport au poids total du composant de laque I, d'un ou de plusieurs polyesters contenant des groupes hydroxyles ainsi que

C) le cas échéant, des pigments ou des charges ainsi que, le cas échéant, des additifs et des adjuvants usuels et

D) le cas échéant, des diluants, se composant d'au moins 50 % en poids d'eau et, le cas échéant, de solvants organiques,

et un composant de laque II, qui contient de 0,5 à 50 % en poids, par rapport au poids total des composants A à C, d'un catalyseur de durcissement acide, caractérisée en ce que l'on a préparé les polyesters utilisés en tant que composant B à partir

a) de 33 à 55 % en moles d'acides dicarboxyliques et

b) de 67 à 45 % en moles de diols et/ou de polyols,

le composant d'acide dicarboxylique a étant un mélange

a₁) de 50 à 100 % en moles d'au moins un acide dicarboxylique aliphatique insaturé oléfinique,

a₂) de 0 à 50 % en moles d'au moins un acide dicarboxylique aliphatique saturé et

a₃) de 0 à 50 % en moles d'au moins un acide dicarboxylique aromatique

et le composant de diol et/ou de polyol b étant un mélange

b₁) de 20 à 90 % en moles d'au moins un glycol monomère et/ou oligomère ayant de 2 à 4 atomes de C par segment de glycol et des poids moléculaires moyens au nombre inférieurs ou égaux à 200,

b₂) de 5 à 30 % en moles d'au moins un glycol polymère ayant de 2 à 4 atomes de C par segment de glycol et un poids moléculaire moyen au nombre compris entre 300 et 1 000 et

b₃) de 0 à 70 % en moles d'au moins un polyol ayant de 2 à 4 groupes OH et de 4 à 10 atomes de C par molécule, à l'exception des glycols utilisés en tant que composant $b_1$,

avec la caractéristique que tant la somme des proportions des composants $a_1$ a $a_3$, comme également la somme des proportions des composants $b_1$ à $b_3$, ainsi que la somme des proportions des composants a et b sont, chacune pour soi, de 100 % en moles.

**2.** Composition de revêtement aqueuse selon la revendication 1, caractérisée en ce que le composant d'acide dicarboxylique a se compose de 100 % en moles du composant $a_1$.

**3.** Composition de revêtement aqueuse, selon la revendication 1 ou 2, caractérisée en ce que le composant de diol et/ou de polyol se compose

b₁) de 25 à 50 % en moles du composant $b_1$,

b₂) de 5 à 20 % en moles du composant $b_2$ et

b₃) de 45 à 70 % en moles du composant $b_3$.

4. Composition de revêtement aqueuse, selon l'une quelconque des revendications 1 à 3, caractérisée en ce que le composant de diol et/ou de polyol b se compose

$b_1$) de 75 à 90 % en moles du composant $b_1$ et

$b_2$) de 10 à 25 % en moles du composant $b_2$.

5. Composition de revêtement aqueuse, selon l'une quelconque des revendications 1 à 4, caractérisée en ce que l'on a préparé les polyesters utilisés en tant que composant B à partir

a) de 43 à 48 % en moles d'acides dicarboxyliques et

b) de 57 à 52 % en moles de diols et/ou de polyols.

6. Composition de revêtement aqueuse selon l'une des revendications 1 à 5, caractérisée en ce que l'on utilise en tant que composant A des résines de mélamine-formaldéhyde éthérées au méthanol et/ou des résines d'urée éthérées au méthanol.

7. Procédé pour le revêtement de feuilles de finition et de bords continus, lors duquel

I) on applique une composition de revêtement aqueuse, contenant un composant de laque I et un composant de laque II, qui sont mélangés immédiatement avant l'application,

II) on soumet le film humide résultant à cuisson pendant une durée de 8 à 50 secondes à une température comprise entre 90 et 200 ° C,

III) on procède, le cas échéant, au surlaquage du revêtement résultant par une laque supplémentaire,

le composant de laque I contenant

A) de 15 à 70 % en poids, de préférence de 30 à 55 % en poids, par rapport au poids total du composant de laque I, d'une ou de plusieurs résines de mélamine et/ou d'urée diluables à l'eau,

B) de 10 à 40 % en poids, de préférence de 15 à 25 % en poids, par rapport au poids total du composant de laque I, d'un ou de plusieurs polyesters contenant des groupes hydroxyles ainsi que

C) le cas échéant, des pigments ou des charges ainsi que, le cas échéant, des additifs et des adjuvants usuels et

D) le cas échéant, des diluants, se composant d'au moins 50 % en poids d'eau et, le cas échéant, de solvants organiques,

et un composant de laque II contenant de 0,5 à 50 % en poids, par rapport au poids total des composants A à C, d'un catalyseur de durcissement acide, caractérisé en ce que l'on a préparé les polyesters utilisés en tant que composant B à partir

a) de 33 à 55 % en moles d'acides dicarboxyliques et

b) de 67 à 45 % en moles de diols et/ou de polyols,

le composant d'acide dicarboxylique a étant un mélange

$a_1$) de 50 à 100 % en moles d'au moins un acide dicarboxylique aliphatique insaturé oléfinique,

$a_2$) de 0 à 50 % en moles d'au moins un acide dicarboxylique aliphatique saturé et

$a^3$) de 0 à 50 % en moles d'au moins un acide dicarboxylique aromatique

et le composant de diol et/ou de polyol b étant un mélange

$b_1$) de 20 à 90 % en moles d'au moins un glycol monomère et/ou oligomère ayant de 2 à 4 atomes de C par segment de glycol et des poids moléculaires moyens au nombre inférieurs ou égaux à 200,

$b_2$) de 5 à 30 % en moles d'au moins un glycol polymère ayant de 2 à 4 atomes de C par segment de glycol et un poids moléculaire moyen au nombre compris entre 300 et 1 000 et

$b_3$) de 0 à 70 % en moles d'au moins un polyol ayant de 2 à 4 groupes OH et de 4 à 10 atomes de C par molécule, à l'exception des glycols utilisés en tant que composant $b_1$,

avec la caractéristique que tant la somme des proportions des composants $a_1$ à $a_3$, comme également la somme des proportions des composants $b_1$ à $b_3$, ainsi que la somme des proportions des composants a et b sont, chacune pour soi, de 100 % en moles.

8. Procédé selon la revendication 7, caractérisé en ce que le composant d'acide dicarboxylique a se compose de 100 % en moles du composant $a_1$.

9. Procédé selon la revendication 7 ou 8, caractérisé en ce que le composant de diol et/ou de polyol b se compose

$b_1$) de 25 à 50 % en moles du composant $b_1$,

$b_2$) de 5 à 20 % en moles du composant $b_2$ et

EP 0 511 976 B1

b$_3$) de 45 à 70 % en moles du composant b$_3$.

10. Procédé selon l'une quelconque des revendications 7 à 9, caractérisé en ce que le composant d'acide carboxylique a se compose de 100 % en moles du composant a$_1$ et que le composant de diol et/ou de polyol b se compose
   b$_1$) de 75 à 90 % en moles du composant b$_1$ et
   b$_2$) de 10 à 25 % en moles du composant b$_2$.

11. Procédé selon l'une quelconque des revendications 7 à 10, caractérisé en ce que l'on a préparé les polyesters utilisés en tant que composant B à partir
   a) de 43 à 48 % en moles d'acides dicarboxyliques et
   b) de 57 à 52 % en moles de diols et/ou de polyols.

12. Procédé selon l'une quelconque des revendications 7 à 11, caractérisé en ce que l'on utilise en tant que composant A des résine de mélamine-formaldéhyde éthérées au méthanol et/ou des résines d'urée éthérées au méthanol.

13. Feuille de finition ou bord continu, caractérisés en ce qu'ils ont été revêtus conformément à l'une des procédés selon la revendication 7 à 12.

14. Utilisation des feuilles de finition ou des bords continus selon la revendication 13 pour le collage sur des panneaux en bois reconstitué ou sur de panneaux en fibres durs.

**Revendications pour l'Etat contractant suivant : ES**

1. Procédé pour la préparation d'une composition de revêtement aqueuse, en particulier pour le revêtement de feuilles de finition et de bords continus, contenant un composant de laque I, qui contient
   A) de 15 à 70 % en poids, de préférence de 30 à 55 % en poids, par rapport au poids total du composant de laque I, d'une ou de plusieurs résines de mélamine et/ou d'urée diluables à l'eau,
   B) de 10 à 40 % en poids, de préférence de 15 à 25 % en poids, par rapport au poids total du composant de laque I, d'un ou de plusieurs polyesters contenant des groupes hydroxyles ainsi que
   C) le cas échéant, des pigments et/ou des charges ainsi que, le cas échéant, des additifs et des adjuvants usuels et
   D) le cas échéant, des diluants, se composant d'au moins 50 % en poids d'eau et, le cas échéant, de solvants organiques,
   et un composant de laque II, qui contient de 0,5 à 50 % en poids, par rapport au poids total des composants A à C, d'un catalyseur de durcissement acide, lors duquel on mélange les composants de laque (I) et (II) avant application, caractérisé en ce que l'on prépare les polyesters utilisés en tant que composant B à partir
   a) de 33 à 55 % en moles d'acides dicarboxyliques et
   b) de 67 à 45 % en moles de diols et/ou de polyols,
   le composant d'acide dicarboxylique a étant un mélange
   a$_1$) de 50 à 100 % en moles d'au moins un acide dicarboxylique aliphatique insaturé oléfinique,
   a$_2$) de 0 à 50 % en moles d'au moins un acide dicarboxylique aliphatique saturé et
   a$_3$) de 0 à 50 % en moles d'au moins un acide dicarboxylique aromatique
   et le composant de diol et/ou de polyol b étant un mélange
   b$_1$) de 20 à 90 % en moles d'au moins un glycol monomère et/ou oligomère ayant de 2 à 4 atomes de C par segment de glycol et un poids moléculaire moyen au nombre ≤ 200,
   b$_2$) de 5 à 30 % en moles d'au moins un glycol polymère ayant de 2 à 4 atomes de C par segment de glycol et un poids moléculaire moyen au nombre compris entre 300 et 1 000 et
   b$_3$) de 0 à 70 % en modes d'au moins un polyol ayant de 2 à 4 groupes OH et de 4 à 10 atomes de C par molécule, à l'exception des glycols utilisés en tant que composant b$_1$,
   avec la caractéristique que tant la somme des proportions des composants a$_1$ à a$_3$, comme également la somme des proportions des composants b$_1$ à b$_3$, ainsi que la somme des proportions des composants a et b sont, chacune pour soi, de 100 % en moles.

2. Procédé selon la revendication 1, caractérisé en ce que le composant d'acide dicarboxylique a se compose de 100 % en moles du composant a$_1$.

26

3. Procédé selon la revendication 1 ou 2, caractérisé en ce que le composant de diol et/ou de polyol se compose

$b_1$) de 25 à 50 % en modes du composant $b_1$,

$b_2$) de 5 à 20 % en modes du composant $b_2$ et

$b_3$) de 45 à 70 % en moles du composant $b_3$.

4. Procédé selon l'une quelconque des revendications 1 à 3, caractérisé en ce que le composant de diol et/ou de polyol se compose

$b_1$) de 75 à 90 % en moles du composant $b_1$ et

$b_2$) de 10 à 25 % en moles du composant $b_2$.

5. Procédé selon l'une quelconque des revendications 1 à 4, caractérisé en ce que l'on prépare les polyesters utilisés en tant que composant B à partir

a) de 43 à 48 % en moles d'acides dicarboxyliques et

b) de 57 à 52 % en moles de diols et/ou de polyols.

6. Procédé selon l'une des revendications 1 à 5, caractérisé en ce que l'on utilise en tant que composant A des résines de mélamine-formaldéhyde éthérées au méthanol et/ou des résines d'urée éthérées au méthanol.

7. Procédé pour le revêtement de feuilles de finition et de bords continus, lors duquel

I) on applique une composition de revêtement aqueuse, contenant un composant de laque I et un composant de laque II, qui sont mélangés immédiatement avant l'application,

II) on soumet le film humide résultant à cuisson pendant une durée de 8 à 50 secondes à une température comprise entre 90 et 200 ° C,

III) on procède, le cas échéant, au surlaquage du revêtement résultant par une laque supplémentaire,

le composant de laque I contenant

A) de 15 à 70 % en poids, de préférence de 30 à 55 % en poids, par rapport au poids total du composant de laque I, d'une ou de plusieurs résines de mélamine et/ou d'urée diluables à l'eau,

B) de 10 à 40 % en poids, de préférence de 15 à 25 % en poids, par rapport au poids total du composant de laque I, d'un ou de plusieurs polyesters contenant des groupes hydroxyles ainsi que

C) le cas échéant, des pigments et/ou des charges ainsi que, le cas échéant, des additifs et des adjuvants usuels et

D) le cas échéant, des diluants, se composant d'au moins 50 % en poids d'eau et, le cas échéant, de solvants organiques,

et un composant de laque II contenant de 0,5 à 50 % en poids, par rapport au poids total des composants A à C, d'un catalyseur de durcissement acide, caractérisé en ce que l'on a préparé les polyesters utilisés en tant que composant B à partir

a) de 33 à 55 % en moles d'acides dicarboxyliques et

b) de 67 à 45 % en moles de diols et/ou de polyols,

le composant d'acide dicarboxylique a étant un mélange

$a_1$) de 50 à 100 % en moles d'au moins un acide dicarboxylique aliphatique insaturé oléfinique,

$a_2$) de 0 à 50 % en moles d'au moins un acide dicarboxylique aliphatique saturé et

$a_3$) 0 à 50 % en moles d'au moins un acide dicarboxylique aromatique

et le composant de diol et/ou de polyol b étant un mélange

$b_1$) de 20 à 90 % en moles d'au moins un glycol monomère et/ou oligomère ayant de 2 à 4 atomes de C par segment de glycol et un poids moléculaire moyen au nombre ≤ 200,

$b_2$) de 5 à 30 % en moles d'au moins un glycol polymère ayant de 2 à 4 atomes de C par segment de glycol et un poids moléculaire moyen au nombre compris entre 300 et 1 000 et

$b_3$) de 0 à 70 % en moles d'au moins un polyol ayant de 2 à 4 groupes OH et de 4 à 10 atomes de C par molécule, à l'exception des glycols utilisés en tant que composant $b_1$,

avec la caractéristique que tant la somme des proportions des composants $a_1$ à $a_3$, comme également la somme des proportions des composants $b_1$ à $b_3$, ainsi que la somme des proportions des composants a et b sont, chacune pour soi, de 100 % en moles.

8. Procédé selon la revendication 7, caractérisé en ce que le composant d'acide dicarboxylique a se compose de 100 % en moles du composant $a_1$.

27

9. Procédé selon la revendication 7 ou 8, caractérisé en ce que le composant de diol et/ou de polyol b se compose

b$_1$) de 25 à 50 % en moles du composant b$_1$,

b$_2$) de 5 à 20 % en moles du composant b$_2$ et

b$_3$) de 45 à 70 % en moles du composant b$_3$.

10. Procédé selon l'une quelconque des revendications 7 à 9, caractérisé en ce que le composant d'acide dicarboxylique a se compose de 100 % en moles du composant a$_1$ et que le composant de diol et/ou de polyol b se compose

b$_1$) de 75 à 90 % en moles du composant b$_1$ et

b$_2$) de 10 à 25 % en moles du composant b$_2$.

11. Procédé selon l'une quelconque des revendications 7 à 10, caractérisé en ce que l'on a préparé les polyesters utilisés en tant que composant B à partir

a) de 43 à 48 % en moles d'acides dicarboxyliques et

b) de 57 à 52 % en moles de diols et/ou de polyols.

12. Procédé selon l'une des revendications 7 à 11, caractérisé en ce que l'on utilise en tant que composant A des résines de mélamine-formaldéhyde éthérées au méthanol et/ou des résines d'urée éthérées au méthanol.

13. Utilisation de feuilles de finition ou de bords continus, qui ont été revêtus conformément à l'un des procédés selon la revendication 7 à 12, pour collage sur des panneaux en bois reconstitué ou sur des panneaux de fibres durs.